## Europäisches Patentamt
## European Patent Office
## Office européen des brevets

(19)

(11) Veröffentlichungsnummer: **0 002 256**
**B1**

(12) **EUROPÄISCHE PATENTSCHRIFT**

(45) Veröffentlichungstag der Patentschrift: **13.01.82**

(51) Int. Cl.³: **C 09 K 5/06, F 24 J 3/00**

(21) Anmeldenummer: **78101487.3**

(22) Anmeldetag: **01.12.78**

(54) Latentwärmespeicher sowie Verfahren zu deren Herstellung und deren Anwendung.

(30) Priorität: **01.12.77 DE 2753598**

(43) Veröffentlichungstag der Anmeldung:
**13.06.79 Patentblatt 79/12**

(45) Bekanntmachung des Hinweises auf die Patenterteilung:
**13.01.82 Patentblatt 82/2**

(84) Benannte Vertragsstaaten:
**BE CH FR GB IT NL SE**

(56) Entgegenhaltungen:
**GB - A - 1 500 245**
**US - A - 2 677 367**
**US - A - 2 827 438**

(73) Patentinhaber: **Friderichs, Peter, Dr.**
**Sandstrasse 21**
**D-6530 Bingen 12 (DE)**

(73) Patentinhaber: **Friderichs-Weinle, Wiltraut**
**Sandstrasse 21**
**D-6530 Bingen (DE)**

(72) Erfinder: **Friderichs, Peter, Dr.**
**Sandstrasse 21**
**D-6530 Bingen 12 (DE)**
Erfinder: **Friderichs-Weinle, Wiltraut**
**Sandstrasse 21**
**D-6530 Bingen (DE)**

(74) Vertreter: **Kohler, Anton, Dr. et al,**
**Dr.A.Kohler + M.Schroeder Patentanwälte Franz-Joseph-Strasse 48**
**D-8000 München 40 (DE)**

Courier Press, Leamington Spa, England.

# 0 002 256

Latentwärmespeicher sowie Verfahren zu deren Herstellung und deren Anwendung

Die Erfindung betrifft Latentwärmespeicher auf der Basis von Dinatriumhydrogenphosphat-Dodekahydrat.

Latentwärmespeicher müssen die Bedingungen erfüllen, daß sie eine hohe Latentwärme besitzen, einen Phasenwechsel in einem geeigneten Temperaturbereich durchlaufen und dieser Phasenwechsel über lange Zeit reversibel bleibt.

Unter Berücksichtigung dieser Kriterien wurden bereits verschiedene Stoffe auf ihre Eignung als Latentwärmespeicher untersucht und beispielsweise auf dem Gebiet der Hausheizung eingesetzt. Dabei wurde beispielsweise $Na_2SO_4 \cdot 10\ H_2O$ mit einem Schmelzpunkt von 32°C und einer Schmelzwärme von 251 kJ/kg eingesetzt. Bei diesem Latentwärmespeicher ergaben sich jedoch in der Praxis Schwierigkeiten, da die Leistung bei wiederholten Zyklen abnahm und sich die Wärmekapazität des Systems durch Ausfällung verringerte. Man behilft sich hierbei, um diese Ausfällung von wasserärmerem oder wasserfreiem $Na_2SO_4$ zu vermeiden, mit einem kräftigen konstanten Durchrühren des Wärmespeichers im flüssigen Zustand, wobei man bisweilen zur Förderung der Durchmischung flüssiges Paraffin oder Öl oder dgl. hindurchpumpt.

Auch wurden bereits eutectische Gemische, z.B. aus 45% Harnstoff und 55% Ammoniumnitrat, in der Literatur beschrieben und dabei vermerkt, daß diese möglicherweise zur Speicherung thermischer Energie geeignet sind. Dieses Harnstoff-Ammonium-nitrateutecticum besitzt einen Schmelzpunkt von 46°C und weist eine Istentwärme von lediglich 172 kJ/kg auf.

Es ist auch bekannt, Dinatriumhydrogenphosphat-Dodekahydrat als Latentwärmespeicher einzusetzen. Diese Substanz weist einen im geeigneten Temperaturbereich liegenden Schmelzpunkt von 35°C sowie eine sehr hohe Latentwärme von 280 kJ/kg auf und wäre aufgrund dieser Eigenschaften als Latentwärmespeicher hervorragend geeignet. Jedoch ergibt sich hierbei der Nachteil, daß der Stoff bereits nach wenigen Zyklen des Phasenwechsels unbrauchbar wird, weil das wasserfreie Dinatriumhydrogenphoshat bzw. ein Dinatriumhydrogenphosphat mit geringerem Kristallwassergehalt, insbesondere das Heptahydrat, ausfällt und Wasser sich oben absetzt. Somit ist der Speichervorgang nicht mehr reversibel und der Stoff als Latentwärmespeicher auf Dauer unbrauchbar.

In dem Versuch, eine Ausfällung des Dinatriumhydrogenphosphat-Heptahydrats zu verhindern, hat man gemäß der US-Patentschrift 2 677 367 als Kristallisationspromotor Glas mit unregelmässiger Oberfläche zum Dodekahydrat, das gegebenenfalls aus wasserfreiem $Na_2HPO_4$ und Wasser hergestellt werden kann, zugesetzt. Die Arbeitsweise mit festen Glaskörpern ist äußerst umständlich und platzraubend, ohne daß mit Sicherheit die gewünschten Ergebnisse über einen langen Zeitraum erzielbar sind. Dagegen ist gemäß der Erfindung kein Glaszusatz erforderlich, so daß der Wärmespeicher einfacher und mit weniger Aufwand herzustellen ist.

Aus der US—A—2 827 438 ist ferner ein Wärmespeichermedium auf der Basis von Dinatriumphosphat, Wasser und Trinatriumphosphat bekannt, dem als Kristallisationsbeschleuniger weniger als 50 Gew.Teile Kohle je 100 Gew.Teile Dinatriumphosphat zugesetzt sind. Ein derartiger Kohlezusatz stellt jedoch für den Wärmespeicher einen erheblichen nicht nutzbaren Ballast dar.

Die Aufgabe der Erfindung besteht nun darin, den Nachteil der Ausfällung von wasserfreiem $Na_2HPO_4$ bzw. $Na_2HPO_4$ mit geringerem Kristallwassergehalt zu vermeiden und den Phasenwechsel von $Na_2HPO_4 \cdot 12H_2O$ über eine praktisch unbegrenzte Zahl von Zyklen reversibel zu halten, ohne die Notwendigkeit des Einsatzes eines Kristallisationsbeschleunigers.

Gegenstand der Erfindung ist ein Latentwärmespeicher mit einem gasdicht verschlossenen Behälter, der ein Latentwärmespeichermittel enthält, der dadurch gekennzeichnet ist, daß der Inhalt des Behälters aus einem Gemisch aus $Na_2HPO_4 \cdot 12H_2O$ und einer zusätzlichen geringen Menge Wasser, bezogen auf $Na_2HPO_4 \cdot 12H_2O$, ohne Zusatz eines Kristallisationsbeschleunigers besteht. Zweckmäßig beträgt der Wasserzusatz bis zu 3%, vorzugsweise 1,5 bis 2,5 Gew.%. Bevorzugt enthält der Latentwärmespeicher neben dem Wasserzusatz noch einen geringen Zusatz an Harnstoff von 0,1 bis 2 Gew.%, insbesondere 0,5 bis 1,2 Gew.%, wobei ein zusatz von 0,7 Gew.% besonders günstig ist.

Eine weiterer Gegenstand der Erfindung ist ein Verfahren zur Herstellung des vorstehend beschriebenen Latentwärmespeichers, das dadurch gekennzeichnet ist, daß zu $Na_2HPO_4 \cdot 12H_2O$ eine geringe Menge Wasser zugemischt wird, das Gemisch auf eine Temperatur erheblich über den Schmelzpunkt erwärmt wird und die gebildete Schmelze in Behältern gasdicht verschlossen wird. Gegebenfalls kann zusätzlich Harnstoff in der vorstehend angegebenen Menge zugemischt werden.

Ein weiter Gegenstand der Erfindung ist die Verwendung des vorstehend beschrieben Latentwärmespeichers für Solar- und Wärmepumpenheizungen und Solar- und Wärmepumpenklimaanlagen.

Der erfindungsgemaße, einen geringen Zusatz an Wasser enthaltende $Na_2HPO_4 \cdot 12H_2O$-Latentwärmespeicher weist die dem Dinatriumhydrogenphosphat-Dodekahydrat eigenen hervorragenden Eigenschaften eines im passenden Temperaturbereich liegenden Schmelzpunktes von 35°C und einer hohen Latentwärme von 403 kJ/dm³ auf und zeichnet sich darüber hinaus dadurch aus, daß der Phasenwechsel über eine beliebig große Zahl von Zyklen reversibel bleibt, ohne daß irgendwelche zusätzliche Maßnahmen getroffen werden müssen.

Die gegebenenfalls in dem $Na_2HPO_4 \cdot 12H_2O$ enthaltene geringe Zusatzmenge an Harnstoff liegt im Bereich von 0,1 bis 2 Gew.%. Eine Zusatz von etwa 0,7 Gew.% Harnstoff hat sich als besonders geeignet erwiesen. Große Mengen Harnstoff sind dagegen zu vermeiden, da in diesem Fall die dem Dinatriumhydrogenphosphat-Dodekahydrat zukommende günstige Kombination von Temperaturlage des Schmelzpunkts und Latentwärme ungünstig abgewandelt wird und ein über lange Zeitdauer reversibel arbeitender Latentwärmespeicher nicht mehr gewährleistet ist. Zum Aufbau des erfindungsgemäßen Latentwärmespeichers können technische Substanzen verwendet werden. Besondere Vorkehrungen zur Vermeidung von Verunreinigungen sind nicht erforderlich.

Zur Herstellung des erfindungsgemäßen Latentwärmespeichers wird $Na_2HPO_4 \cdot 12H_2O$ mit einer geringen Menge Wasser vermischt, wobei zweckmäßig geschüttelt bzw. gerührt wird und das Gemisch dann über den Schmelzpunkt erwärmt und zur Kristallisation abgekühlt wird. Der gegenüber der stöchiometrischen Menge des im Dodekahydrat enthaltenen Wassers vorhandene Wasserüberschuß garantiert, daß eine stets ausreichende Menge Wasser zur Bildung des Dodekahydrats zur Verfügung steht und somit kein Natriumhydrogenphosphate mit geringerem oder ohne Kristallwassergehalt ausfallen. Dies ist insbesondere wichtig, da $Na_2HPO_4 \cdot 12H_2O$ in offenen Behältern leicht Wasser abgibt. Es ist gegebenenfalls erforderlich, das Gemisch nochmals bei einer Temperatur, die wesentlich über dem Schmelzpunkt des $Na_2HPO_4 \cdot 12H_2O$ liegt, aufzuschmelzen, zu schütteln und zur Kristallisation abzukühlen. Die dabei angewendete Temperatur darf den Siedepunkt von Wasser nicht übersteigen. Zweckmäßig wird auf 60 bis 70°C, vorzugsweise 65°C, erhitzt. Danach ist das fertige Gemisch zum Einsatz als Latentwärmespeicher geeignet.

Gemäß der besonders bevorzugten Ausführungsform der Erfindung wird das $Na_2HPO_4 \cdot 12H_2O$ neben einer geringen Menge Wasser zusätzlich mit 0,1 bis 2 Gew.% Harnstoff versetzt und das Gemisch in der gleichen Weise wie vorstehend mit alleinigem Wasserzusatz beschrieben, weiterbehandelt und gegebenenfalls dieser Vorgang wiederholt. Dabei ist es wesentlich, daß der Harnstoff gut und gründlich eingearbeitet ist.

Der Wasser und Harnstoff enthaltende Latentwärmespeicher der Erfindung besitzt den zusätzlichen Vorteil eines geringeren Ausdehnungskoeffizienten, so daß die Handhabung des Speichers in beliebigen Behältermaterialien erfolgen kann, ohne daß eine Zerplatzen der Gefäße zu befürchten ist.

Sowohl bei der Aufbewahrung als auch bei der Anwendung wird der Latentwärmespeicher unter Ausschluß von Sauerstoff und Feuchtigkeit gehalten, d.h., in geschlossenen Gefäßen.

Der erfindungsgemäße Latentwärmespeicher ist vielseitig verwendbar und wird insbesondere für Solar- und Wärmepumpenheizungen sowie -klimaanlagen verwendet. Ein besonders geeignetes Anwendungsgebiet ergibt sich als Nachtspeicherheizung. Dabei wird der beispielsweise im Fußboden befindliche Latentwärmespeicher mit billigem Nachtstrom aufgeschmolzen, wonach dann zur Raumheizung die bei der Kristallisation vom Speicher abgegebene Wärme zur Verfügung steht.

Die Wirkungsweise des Latentwärmespeichers beruht darauf, daß durch Zuführung von Fremdwärme (Solarwärme, Erdwärme, etc.) zum kristallisierten Material eine Phasenänderung zur flüssigen Phase hervorgerufen wird (Speichervorgang). Bei Bedarf wird diese Latentenergie dadurch zurückgewonnen, daß die umgekehrte Phasenänderung (Kristallisation) bewirkt wird. Die Auslösung der Kristallisation kann beispielsweise durch lokale Kühlung, vorzugsweise auf eine Temperatur <25°C, erfolgen. Hierbei wird die gespeicherte Latentenergie bis zur vollständigen Durchkristallisation des Latentwärmespeichers abgegeben und zur Verwertung zur Verfügung gestellt.

Die Erfindung wird durch die folgenden Beispiele erläutert.

### Beispiel 1

700 ml einer auf 60°C erhitzten $Na_2HPO_4 \cdot 12H_2O$-Schmelze wurden mit 15 ml Wasser versetzt, in ein Gefäß abgefüllt, gasdicht verschlossen und geschüttelt. Danach ließ man das Gemisch unter Kristallisation abkühlen.

Beim Aufheizen des Gefäßes mit Inhalt durch Abfallwärme bei einer Temperatur von 40 bis 50°C trat Verflüssigung des Inhalts ein, und man erhielt eine durchsichtige klare Lösung. Durch lokale Kühlung wurde die Kristallisation engeleitet, und der Inhalt gab während der Kristallisation seine Latentwärme ab. Auch nach vielfacher Wiederholung des Zyklus ergab sich keine Änderung des Verhaltens.

### Beispiel 2

7 g Harnstoff wurden in einem 700 ml-Gefäß in etwa 20 ml $H_2O$ gelöst. In einem zweiten Gefäß wurde $Na_2HPO_4 \cdot 12H_2O$ aufgeschmolzen und auf etwa 65°C erhitzt. Mit der auf diese Temperatur erhitzten Schmelze wurde das 700 ml-Gefäß aufgefüllt, gasdicht verschlossen und geschüttelt. Das Gemisch kühlte ab und kristallisierte aus. Der Latentspeicher war dann einsatzfähig.

Wenn das Gefäß mit Inhalt durch Abfallwärme bei einer Temperatur von 40 bis 45°C aufgeheizt wurde, verflüssigte sich der Inhalt und man erhielt eine durchsichtige klare Lösung. Durch lokale Kühlung wurde die Kristallisation eingeleitet, und der Inhalt des Gefäßes gab während der Kristallisation seine Latentwärme ab. Auch bei der 10. Wiederholung trat keine Änderung des Verhaltens ein.

Wenn zum Vergleich ohne Zusatz von Wasser und Harnstoff gearbeitet wurde, trat bereits beim 2. Zyklus eine Ausfällung auf, die beim anschließenden Erwärmen nicht in Lösung gebracht werden konnte, sodaß ein trübes undurchsichtiges Material erhalten wurde, das als reversibler Wärmespeicher nicht mehr brauchbar war.

# 0 002 256

## Patentansprüche

1. Latentwärmespeicher mit einem gasdicht verschlossenen Behälter, der ein Latentwärmespeichermittel enthält, dadurch gekennzeichnet, daß der Inhalt des Behälters aus einem Gemisch aus $Na_2HPO_4 \cdot 12H_2O$, und einer zusätzlichen geringen Menge Wasser, bezogen auf $Na_2HPO_4 \cdot 12H_2O$, ohne Zusatz eines Kristallisationsbeschleunigers, besteht.

2. Latentwärmespeicher nach Anspruch 1, dadurch gekennzeichnet, daß die zusätzliche Wassermenge bis zu 3 Gew.-%, bezogen auf $Na_2HPO_4 \cdot 12H_2O$, beträgt.

3. Latentwärmespeicher nach Anspruch 1 oder 2, dadurch gekennzeichnet, daß der Behälter zusätzlich 0,1 bis 2 Gew.-% Harnstoff, bezogen auf das Gemisch, enthält.

4. Verfahren zur Herstellung des Latentwärmespeichers nach Anspruch 1, dadurch gekennzeichnet, daß zu $Na_2HPO_4 \cdot 12H_2O$ eine geringe Menge Wasser zugemischt wird, das Gemisch auf eine Temperatur erheblich über dem Schmelzpunkt erwärmt wird und die gebildete Schmelze in Behältern gasdicht verschlossen wird.

5. Verwendung des Latentwärmespeichers nach Anspruch 1 bis 3, für Solar- und Wärmepumpenheizungen und Solar- und Wärmepumpenklimaanlagen.

## Revendications

1. Accumulateur de chaleur latente comportant un récipient fermé étanche aux gaz, qui contient un milieu accumulateur de chaleur latente, caractérisé en ce que le contenu du récipient consiste en un mélange de $Na_2HPO_4, 12H_2O$ et d'une faible quantité supplémentaire d'eau, par rapport à $Na_2HPO_4, 12H_2O$, sans addition d'un accélérateur de cristallisation.

2. Accumulateur de chaleur latente selon la revendication 1, caractérisé en ce que la quantité d'eau supplémentaire atteint jusqu'à 3% en poids par rapport à $Na_2HPO_4, 12H_2O$.

3. Accumulateur de chaleur latente selon la revendication 1 ou 2, caractérisé en ce que le récipient contient en outre 0,1 à 2% en poids d'urée, par rapport au mélange.

4. Procédé pour la préparation de l'accumulateur de chaleur latente selon la revendication 1, caractérisé en ce que l'on mélange avec $Na_2HPO_4, 12H_2O$ une faible quantité d'eau, on chauffe le mélange à une température notablement supérieure au point de fusion et on enferme la masse fondue de manière étanche aux gaz dans des récipients.

5. Utilisation de l'accumulateur de chaleur latente selon les revendications 1 à 3, pour les chauffages solaires et par pompe à chaleur et les installations de climatisation solaires et par pompe à chaleur.

## Claims

1. A latent heat store with a container which is provided with a gas-tight seal and contains a latent heat storing means, characterised in that the content of the container comprises a mixture of $Na_2HPO_4 \cdot 12H_2O$ and an additional small quantity of water, relative to $Na_2HPO_4 \cdot 12H_2O$, without the addition of crystallisation accelerator.

2. A latent heat store according to claim 1, characterised in that the additional quantity of water amounts to up to 3% by weight relative to $Na_2HPO_4 \cdot 12H_2O$.

3. A latent heat store according to claim 1 or 2, characterised in that the container also contains 0.1 to 2% by weight of urea relative to the mixture.

4. A method of manufacturing the latent heat store according to claim 1, characterised in that a small amount of water is added to $Na_2HPO_4 \cdot 12H_2O$; the mixture is heated to a temperature considerably above the melting point and the melt thus formed is sealed in containers in a gas-tight manner.

5. Use of the latent heat store according to claim 1 to 3 for solar and heat pump heating systems and solar and heat pump air-conditioning systems.